(19) Europäisches Patentamt
European Patent Office
Office européen des brevets

(11) EP 3 527 697 B1

(12) **EUROPEAN PATENT SPECIFICATION**

(45) Date of publication and mention of the grant of the patent:
**16.02.2022 Bulletin 2022/07**

(21) Application number: **17859620.1**

(22) Date of filing: **11.10.2017**

(51) International Patent Classification (IPC):
***C25B 1/04*** *(2021.01)* ***C25B 9/23*** *(2021.01)*
***C25B 13/02*** *(2006.01)* ***C25B 13/08*** *(2006.01)*
***C08J 5/22*** *(2006.01)*

(52) Cooperative Patent Classification (CPC):
**C25B 13/08; C08J 5/2237; C25B 1/04; C25B 9/23; C25B 13/02;** C08J 2327/18; C08J 2427/12; Y02E 60/36

(86) International application number:
**PCT/JP2017/036870**

(87) International publication number:
**WO 2018/070444 (19.04.2018 Gazette 2018/16)**

(54) **DIAPHRAGM FOR ELECTROLYZING ALKALINE WATER, AND DEVICE FOR ELECTROLYZING ALKALINE WATER**

MEMBRAN ZUR ELEKTROLYSE VON ALKALISCHEM WASSER UND VORRICHTUNG ZUR ELEKTROLYSE VON ALKALISCHEM WASSER

DIAPHRAGME D'ÉLECTROLYSE D'EAU ALCALINE, ET DISPOSITIF D'ÉLECTROLYSE D'EAU ALCALINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2016 JP 2016201803**

(43) Date of publication of application:
**21.08.2019 Bulletin 2019/34**

(73) Proprietor: **AGC Inc.**
**Chiyoda-ku**
**Tokyo 100-8405 (JP)**

(72) Inventors:
- **YAMAKI Yasushi**
  **Tokyo 100-8405 (JP)**
- **SUMIKURA Kosuke**
  **Tokyo 100-8405 (JP)**
- **MIYAMOTO Satoru**
  **Tokyo 100-8405 (JP)**
- **KUSANO Hiromitsu**
  **Tokyo 100-8405 (JP)**
- **NISHIO Takuo**
  **Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-2008/093570**
**JP-A- H0 978 280**
**JP-A- H03 137 136**
**JP-A- H08 158 085**
**JP-A- H08 188 895**
**JP-A- S57 194 274**
**US-A- 4 324 606**
**US-A- 5 716 504**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 527 697 B1

## Description

TECHNICAL FIELD

The present invention relates to a diaphragm for electrolyzing alkaline water and a device for electrolyzing alkaline water.

BACKGROUND ART

In the power generation using renewable energy such as solar power generation, wind power generation, etc., the power generation amount changes depending on the time zone of day or natural conditions. Therefore, it has been proposed to convert surplus power to hydrogen. Converted hydrogen can be stored or transported, and it may be used as chemical raw material for e.g. methane, methanol, etc., or may be used as a heat source by directly burning it or may be supplied to a fuel cell to be converted again to electric power. As a method for converting surplus power to hydrogen, electrolysis of water is the most common and attractive method. As the liquid to be used in the electrolysis, in addition to pure water, an alkaline aqueous solution (such as an aqueous potassium hydroxide solution or an aqueous sodium hydroxide solution) is common, and from such a viewpoint that it is easy to enlarge the size of equipment, or the initial investment cost for equipment is cheap, an alkaline aqueous solution is considered to be advantageous.

In the electrolysis of alkaline water, a device for electrolyzing alkaline water is used which comprises an electrolytic cell having a cathode and an anode, and a diaphragm mounted in the electrolytic cell so as to partition inside of the electrolytic cell into a cathode chamber on the cathode side and an anode chamber on the anode side.

The following performance is required for the diaphragm for electrolyzing alkaline water.

- In order to efficiently conduct the electrolysis of alkaline water by saving electric power, it is necessary to suppress the electrolysis voltage to be low.
- It is necessary to set the gas permeability of the diaphragm to be low, so that hydrogen generated at the cathode and oxygen generated at the anode would not be mixed with each other.

As the diaphragm for electrolyzing alkaline water, for example, the following ones have been known.

(1) An ion-permeable diaphragm comprising a fluorinated ion-exchange membrane having sulfonic acid functional groups with an equivalent weight of 950 g/eq (1.05 meq/g dry resin in terms of ion-exchange capacity), and a core material of polytetrafluoroethylene (Patent Document 1).

(2) A diaphragm for electrolyzing alkaline water, made of a laminate of a layer containing a polymer having sulfonic acid functional groups and a layer containing a polymer having carboxylic acid functional groups (Patent Document 2).

WO 2008/093570 A1 describes an ion-exchange membrane for alkali chloride electrolysis. JP H09-78280 A describes a cation exchange membrane for electrolysis and production of high purity potassium hydroxide. JP H03-137136 A describes a fluorine-based cation-exchange membrane. JP H08-188895 A describes a water electrolyzing method. US 5,716,504 A describes a cation exchange membrane for electrolysis and a process for producing potassium hydroxide of high purity. US 4,324,606 A describes a process for forming a reinforced membrane. JP H08-158085 A describes a electrolytic cell for producing alkaline ionized water. JP S57-194274 A describes the production of hydrogen.

PRIOR ART DOCUMENTS

PATENT DOCUMENTS

Patent Document 1: WO2013/191140
Patent Document 2: JP-A-2015-117407

DISCLOSURE OF INVENTION

TECHNICAL PROBLEM

However, in a case where the diaphragm for electrolyzing alkaline water in (1) or (2) is used, there is a problem such that the electrolysis voltage tends to be high at the time of increasing the current density in the electrolysis of

alkaline water in order to increase the amount of hydrogen generated per electrolyzer.

Further, in a case where the diaphragm for electrolyzing alkaline water in (2) is used, peeling is likely to occur between the layer containing a polymer having sulfonic acid functional groups, and the layer containing a polymer having carboxylic acid functional groups.

Further, in order to improve the electric power consumption rate, introduction of a zero-gap electrolyzer having a diaphragm directly sandwiched between an anode and a cathode, has been in progress. However, in the zero-gap electrolyzer, there is a problem that increase in the electrolysis voltage due to adhesion of gas to the surface of the diaphragm is more likely to occur.

It is an object of the present invention to provide a diaphragm for electrolyzing alkaline water and a device for electrolyzing alkaline water, whereby at the time of electrolyzing alkaline water, it is possible to suppress the electrolysis voltage to be low even at a high current density, and interlayer peeling is unlikely to occur.

## SOLUTION TO PROBLEM

The present invention relates to the diaphragm of claim 1 and the device of claim 11. Dependent claims 2 to 10 relate to certain embodiments of the invention.

## ADVANTAGEOUS EFFECTS OF INVENTION

According to the diaphragm for electrolyzing alkaline water and the device for electrolyzing alkaline water of the present invention, at the time of electrolyzing alkaline water, it is possible to suppress the electrolysis voltage to be low even at a high current density, and interlayer peeling is unlikely to occur.

## BRIEF DESCRIPTION OF DRAWINGS

Fig. 1 is a cross-sectional view showing an example of the diaphragm for electrolyzing alkaline water of the present invention.

Fig. 2 is a schematic view showing an example of the device for electrolyzing alkaline water of the present invention.

## DESCRIPTION OF EMBODIMENTS

In this specification, a monomer represented by the formula (1) will be referred to as a monomer (1). Monomers represented by other formulae will also be referred to in the same manner.

In this specification, meanings of the following terms are as follows.

A "sulfonic acid functional group" means a sulfonic acid group ($-SO_3H$) or a sulfonate ($-SO_3M^1$, where $M^1$ is an alkali metal or a quaternary ammonium).

A "carboxylic acid functional group" means a carboxylic acid group (-COOH) or a carboxylate ($-COOM^2$, where $M^2$ is an alkali metal or a quaternary ammonium).

A "group convertible to a sulfonic acid functional group" means a group that can be converted to a sulfonic acid functional group by known treatment such as hydrolysis treatment or acid-form treatment.

A "unit" in a polymer means an atomic group formed by polymerization of a monomer, derived from one molecule of the monomer. The unit may be an atomic group directly formed by the polymerization reaction, or may be an atomic group having a part of the atomic group converted to another structure by treating the polymer obtained by the polymerization reaction.

The "primary particles" means the smallest particles as observed by a scanning electron microscope (SEM). And, the "secondary particles" means particles having the primary particles aggregated.

A "reinforcing material" means a structure that is used to improve the strength of a diaphragm.

A "reinforcing fabric" means a fabric made of reinforcing threads and sacrificial threads, to be used as raw material for a reinforcing material, or a fabric made of reinforcing threads, to be used as a reinforcing material by itself.

The "reinforcing threads" is threads constituting a reinforcing fabric, and is threads made of a material which will not be eluted even if the reinforcing fabric is brought in contact with an alkaline aqueous solution. The reinforcing threads will remain without being dissolved even after the diaphragm containing the reinforcing fabric is brought in contact with an alkaline aqueous solution so that at least part of the sacrificial threads is eluted from the reinforcing fabric, and thus will contribute the maintenance of the mechanical strength and dimensional stability of the diaphragm.

The "sacrificial threads" is threads constituting a reinforcing fabric, and is threads made of a material, of which at least part will be eluted when the reinforcing fabric is brought in contact with an alkaline aqueous solution.

<Diaphragm for electrolyzing alkaline water>

The diaphragm for electrolyzing alkaline water (hereinafter simply referred to also as the "diaphragm") of the present invention, comprises an ion-exchange membrane which contains a polymer having sulfonic acid functional groups (hereinafter simply referred to also as "polymer (S)") and which does not contain a polymer having carboxylic acid functional groups (hereinafter simply referred to also as "polymer (C)"), and a hydrophilic layer which is provided as the outermost layer on at least one side of the diaphragm.

The diaphragm has the reinforcing material made of a woven fabric, whereby it is possible to maintain the mechanical strength even when the ion-exchange membrane is made to be thin, i.e. it is possible to make the diaphragm to be sufficiently thin.

The thickness of the ion-exchange membrane is from 25 to 70 μm. The thickness of the ion-exchange membrane is determined as described below in detail.

When the thickness of the ion-exchange membrane is at least 5 μm, the gas permeation in the diaphragm is less likely to occur. Further, if the thickness of the ion-exchange membrane is at least 25 μm, the mechanical strength of the diaphragm will be high, and it will be durable for electrolysis for a long period of time. When the thickness of the ion-exchange membrane is at most the upper limit value in the above range, the membrane resistance can be suppressed to be low, and the electrolysis voltage at the time of electrolyzing alkaline water can be suppressed to be low. Here, the thickness of the ion-exchange membrane does not include the thickness of the reinforcing material and the thickness of the hydrophilic layer.

The shape and size of the diaphragm may be suitably determined depending on the size of the electrolytic cell to mount the diaphragm and the type of the electrodes.

Fig. 1 is a cross-sectional view showing an example of the diaphragm of the present invention.

The diaphragm 1 comprises an ion-exchange membrane 10 which contains polymer (S) and which does not contain polymer (C), a first hydrophilic layer 12 in contact with a first surface of the ion-exchange membrane 10, a second hydrophilic layer 14 in contact with a second surface of the ion-exchange membrane 10, and a reinforcing material 16 embedded in the ion-exchange membrane 10.

The ion-exchange membrane 10 has a first layer 10a and a second layer 10b.

The reinforcing material 16 is embedded between the first layer 10a and the second layer 10b.

(Ion-exchange membrane)

The ion-exchange membrane contains polymer (S) and does not contain polymer (C). As it contains no polymer (C), it is possible to suppress the voltage increase at the time of electrolysis. Further, the ion-exchange membrane containing no polymer (C) means that the ion-exchange membrane does not simultaneously have a layer containing polymer (S) and a layer containing polymer (C). In an ion-exchange membrane having a layer containing polymer (S) and a layer containing polymer (C), interlayer peeling is likely to occur.

Further, the layer containing polymer (S) is preferably constituted by a dense layer made solely of said polymer in order to express high gas barrier properties.

The ion-exchange membrane may be a single layer or may be a multilayer. In a case where the ion-exchange membrane is made to be a multi-layer, polymers (S) to form the respective layers may be the same or different. The different polymers (S) may be those different in types of units constituting the respective polymers (S), those different in proportions of units having sulfonic acid functional groups in the respective polymers (S), etc. In a case where the ion-exchange membrane is a multilayer, it is preferred that it has at least one dense layer composed of polymer (S).

At the time of embedding the reinforcing material in the ion-exchange membrane, it is preferred that the ion-exchange membrane is made to be a multilayer, and the reinforcing material is inserted at one of the interlayers at the time of the production, so that the reinforcing material is embedded.

In a case where the ion-exchange membrane is made to have two-layers, the thickness of the second layer in the ion-exchange membrane is preferably from 2.5 to 125 μm, more preferably from 5 to 90 μm, further preferably from 12.5 to 90 μm, particularly preferably from 12.5 to 55 μm, most preferably from 12.5 to 35 μm. When the thickness of the second layer is at least the lower limit value in the above range, it will be easy to embed the reinforcing material in the ion-exchange membrane, and also interlayer peeling will be suppressed. When the thickness of the second layer is at most the upper limit value in the above range, the membrane resistance can be suppressed to be lower, and the electrolysis voltage at the time of electrolyzing alkaline water can be suppressed to be lower.

In a case where the ion-exchange membrane is made to have two-layers, the thickness of the first layer in the ion-exchange membrane is preferably from 2.5 to 125 μm, more preferably from 5 to 90 μm, further preferably from 12.5 to 90 μm, particularly preferably from 12.5 to 55 μm, most preferably from 12.5 to 35 μm. When the thickness of the first layer is at least the lower limit value in the above range, it will be easy to embed the reinforcing material in the ion-exchange membrane, and also interlayer peeling will be suppressed. When the thickness of the first layer is at most

the upper limit value in the above range, the membrane resistance can be suppressed to be lower, and the electrolysis voltage at the time of electrolyzing alkaline water can be suppressed to be lower.

In the present invention, the ion-exchange capacity of polymer (S) is within a specific range. In the present invention, it is more preferred that both of the ion-exchange capacity of polymer (S) and the water content of polymer (S) are within specific ranges.

The ion-exchange capacity of polymer (S) is from 1.2 to 1.8 meq/g dry resin. The ion-exchange capacity of polymer (S) is determined as described below in detail. When the ion-exchange capacity of polymer (S) is at least the lower limit value in the above range, the membrane resistance can be suppressed to be low, and the electrolysis voltage at the time of electrolyzing alkaline water can be suppressed to be low. When the ion-exchange capacity of polymer (S) is at most the upper limit value in the above range, the mechanical strength of the membrane will be high, and it will be durable in use for electrolysis for a long period of time.

The ion-exchange capacity of polymer (S) can be adjusted by the proportion of units having sulfonic acid functional groups in polymer (S).

The water content of polymer (S) is preferably from 10 to 150 mass%, more preferably from 20 to 150 mass%. When the water content of polymer (S) is at least the lower limit value in the above range, the membrane resistance can be suppressed to be lower, and the electrolysis voltage for electrolyzing alkaline water can be suppressed to be lower. When the water content of polymer (S) is at most the upper limit value in the above range, the mechanical strength of the membrane will be high, and it will be durable in use for electrolysis for a long period of time.

The water content of polymer (S) may be adjusted by the proportion of units having sulfonic acid functional groups in polymer (S) and the conditions for hydrolysis treatment of a polymer having groups convertible to sulfonic acid functional groups (hereinafter simply referred to also as "polymer (S')") as a precursor for polymer (S).

Here, the water content of polymer (S) is a water content measured by the measurement method as described in Examples given later.

The TQ value of polymer (S) is, from the viewpoint of mechanical strength and membrane-forming properties as an ion-exchange membrane, preferably at least 150°C, more preferably from 170 to 340°C, further preferably from 170 to 300°C.

The TQ value is a value relating to the molecular weight of the polymer, and is one represented by a temperature showing a volume flow rate of 100 $mm^3$/ sec. The higher the TQ value, the higher the molecular weight.

The above TQ value is a TQ value measured by the measurement method as described in Examples given later.

Polymer (S) may be a known ion-exchange resin having sulfonic acid functional groups.

Polymer (S) is, from the viewpoint of the chemical durability of the diaphragm, preferably a fluorinated polymer having sulfonic acid functional groups (hereinafter simply referred to also as "fluorinated polymer (FS)").

Fluorinated polymer (FS) may, for example, be one obtained by converting groups convertible to sulfonic acid functional groups, of a fluorinated polymer having the groups convertible to sulfonic acid functional groups (hereinafter simply referred to also as "fluorinated polymer (FS')"), to sulfonic acid functional groups, by conducting hydrolysis treatment.

Fluorinated polymer (FS) is preferably a fluorinated polymer (hereinafter simply referred to also as "fluorinated polymer (FS1)") having Z converted to $-SO_3M$ (where M is an alkali metal) by conducting hydrolysis treatment of a fluorinated polymer having units based on monomer (1) and at least one of units based on monomer (2) and units based on monomer (3) (hereinafter simply referred to also as "fluorinated polymer (FS'1)", more preferably fluorinated polymer (FS1) having Z converted to $-SO_3M$ by hydrolysis treatment of fluorinated polymer (FS'1) having units based on monomer (1) and units based on monomer (2).

$CF_2=CX^1X^2$ (1)

$CF_2=CF-O-R^{f1}-Z$ (2)

$CF_2=CF-R^{f2}-Z$ (3)

$X^1$ and $X^2$ are each independently a fluorine atom, a chlorine atom or a trifluoromethyl group. As $X^1$ and $X^2$, from the viewpoint of chemical durability of the diaphragm, a fluorine atom is preferred.

$R^{f1}$ and $R^{f2}$ are each independently a $C_{1-20}$ perfluoroalkylene group or a $C_{2-20}$ perfluoroalkylene group having at least one etheric oxygen atom between carbon atoms. The perfluoroalkylene group may be linear or may be branched.

Z is a group convertible to a sulfonic acid functional group. Z may, for example, be $-SO_2F$, $-SO_2Cl$, $-SO_2Br$, etc.

Monomer (1) may be $CF_2=CF_2$, $CF_2=CFCl$, $CF_2=CFCF_3$, etc., and from the viewpoint of chemical durability of the diaphragm, $CF_2=CF_2$ is preferred.

As monomer (2) or monomer (3), from such a viewpoint that the industrial synthesis is easy, the following compounds are preferred.

$CF2 =CF-O-CF_2 CF2 -SO_2 F$,

$CF2 =CF-O-CF_2 CF2 CF2 -SO_2 F$,

$CF2 =CF-O-CF_2 CF2 CF2 CF2 -SO_2 F$,

$CF_2 =CF-O-CF_2 CF(CF_3 )-O-CF_2 CF_2 -SO_2 F$,

$CF_2 =CF-O-CF_2 CF(CF_3 )-O-CF_2 CF_2 CF_2 -SO_2 F$,

$CF_2 =CF-O-CF_2 CF(CF_3 )-SO_2 F$,

$CF_2 =CF-CF_2 CF_2 -SO_2 F$,

$CF_2 =CF-CF_2 CF2 CF2 -SO_2 F$,

$CF_2 =CF-CF_2 -O-CF_2 CF2 -SO_2F$.

As monomer (2) or monomer (3), one type may be used alone, or two or more types may be used in combination.

Fluorinated polymer (FS1) may further have units based on other monomers. Other monomers may be $CF_2$=$CFR^{f4}$ ($R^{f4}$ is a $C_{2-10}$ perfluoroalkyl group), $CF_2$=CF-$OR^{f5}$ ($R^{f5}$ is a $C_{1-10}$ perfluoroalkyl group), $CF_2=CFO(CF_2)_vCF=CF_2$ (v is an integer of from 1 to 3.), etc.

When fluoropolymer (FS1) further has units based on other monomers, it is possible to increase the flexibility and the mechanical strength of the diaphragm.

The proportion of units based on monomer (1), and the total proportion of units based on monomer (2) and units based on monomer (3), may be suitably set so that the ion-exchange capacity of fluorinated polymer (FS1) will be in the above-described range.

From such a viewpoint that the membrane resistance of the diaphragm can be suppressed to be lower, and the electrolysis voltage at the time of electrolyzing alkaline water can be suppressed to be lower, it is preferred that the ion-exchange membrane contains, as polymer (S), a polymer having units represented by the following formula (u1).

$$-[CF2 -CF(-O-CF2 CF(CF_3 )-O-(CF_2 )m -SO_3 M)]- \qquad (u1)$$

wherein m is an integer of from 1 to 6, and M is an alkali metal.

From such a viewpoint that it will be easy to raise the ion-exchange capacity per unit mass, the membrane resistance of the diaphragm can be suppressed to be lower, and the electrolysis voltage at the time of electrolyzing alkaline water can be suppressed to be lower, it is preferred that the ion-exchange membrane contains, as polymer (S), a polymer having units represented by the following formula (u2).

$$-[CF2 -CF(-O-(CF_2 )_m-SO_3 M)]- \qquad (u2)$$

wherein m is an integer of from 1 to 6, and M is an alkali metal.

It is preferred that the ion-exchange membrane contains, as polymer (S), a polymer having units having at least two, preferably two, sulfonic acid functional groups. When it contains a polymer having units having at least two sulfonic acid functional groups, it becomes possible to increase the ion-exchange group concentration per unit mass at the same monomer concentration, whereby it becomes possible to have a higher ion-exchange capacity even with a small monomer amount, as compared with a polymer having units having only one sulfonic acid functional group.

As the units having at least two sulfonic acid functional groups, units represented by the following formula (u3) are preferred.

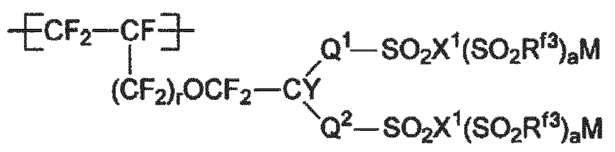

(u3)

wherein $Q^1$ is a perfluoroalkylene group which may have an etheric oxygen atom, $Q^2$ is a single bond or a perfluoroalkylene group which may have an etheric oxygen atom, $R^{f3}$ is a perfluoroalkyl group which may have an etheric oxygen atom, $X^1$ is an oxygen atom, a nitrogen atom or a carbon atom, when $X^1$ is an oxygen atom, a is 0, when $X^1$ is a nitrogen atom, a is 1, and when $X^1$ is a carbon atom, a is 2, Y is a fluorine atom or a monovalent perfluoro organic group, r is 0 or 1, and M is an alkali metal.

The units represented by the formula (u3) are preferably units represented by the following formula (u31).

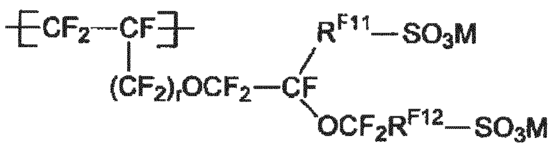

(u31)

wherein $R^{F11}$ is a single bond or a $C_{1-6}$ linear perfluoroalkylene group which may have an etheric oxygen atom, $R^{F12}$ is a $C_{1-6}$ linear perfluoroalkylene group, r is 0 or 1, and M is an alkali metal.

(Hydrophilic layer)

The diaphragm has a hydrophilic layer as the outermost surface layer on at least one side, and preferably has a hydrophilic layer as the outermost layer on each side.

By providing the hydrophilic layer as the outermost layer of the diaphragm, it is possible to suppress adhesion of gas to the surface of the diaphragm, and as a result, it is possible to further suppress the electrolysis voltage from becoming high at the time of electrolyzing alkaline water.

As the hydrophilic layer, an inorganic particle layer containing inorganic particles is used.

The inorganic particles are preferably ones being excellent in corrosion resistance to acid or alkali and having hydrophilicity. Specifically, at least one type selected from the group consisting of oxides, nitrides and carbides, of Group 4 elements or Group 14 elements, is preferred; $SiO_2$, SiC, $ZrO_2$ or ZrC is more preferred; and $ZrO_2$ is particularly preferred.

The average particle diameter of the inorganic particles is preferably from 0.5 to 1.5 μm, more preferably from 0.7 to 1.3 μm. When the average particle diameter of the inorganic particles is at least the above lower limit value, it is possible to obtain a high gas adhesion suppressing effect. When the average particle diameter of the inorganic particles is at most the above upper limit value, dropping resistance of the inorganic particles will be excellent.

Here, the average particle diameter of the inorganic particles means an average particle diameter of particles (secondary particles) having primary particles aggregated, and represents a particle diameter (D50) at a point where the cumulative volume becomes to be 50% in the cumulative volume normal distribution curve obtained by dispersing the inorganic particles in ethanol so that the concentration becomes to be at most 0.01 mass% and setting the total volume of the particle size distribution obtained by using a micro-track, to be 100%.

The hydrophilic layer may contain a binder. As the binder, a known binder to be used in a known hydrophilic layer (gas release layer) may be employed, and, for example, methyl cellulose or a fluorinated polymer having sulfonic acid groups may be mentioned.

As the fluorinated polymer having sulfonic acid groups, a fluorinated polymer may be mentioned which is obtained by subjecting fluorinated polymer (FS'1) having units based on monomer (1), and at least one of units based on monomer (2) and units based on monomer (3), to hydrolysis treatment, followed by acid-form treatment to have Z converted to $-SO_3H$.

The amount of inorganic particles is, per area of the diaphragm, preferably from 0.5 to 50 $g/m^2$, more preferably from 0.5 to 30 $g/m^2$, further preferably from 0.5 to 25 $g/m^2$. When the amount of inorganic particles is at least the lower limit value in the above range, a sufficient gas adhesion suppressing effect can be obtained. When the amount of inorganic particles is at most the upper limit value in the above range, the membrane resistance can be suppressed to be low, and the electrolysis voltage at the time of electrolyzing alkaline water can be suppressed to be low.

The amount of the binder is, in a mass ratio to the total mass of the inorganic particles and the binder, preferably from 0.15 to 0.3, more preferably from 0.15 to 0.25, further preferably from 0.16 to 0.20. When the amount of the binder is at least the lower limit value in the above range, dropping resistance of the inorganic particles will be excellent. When the amount of the binder is at most the upper limit value in the above range, it is possible to obtain a high gas adhesion suppressing effect.

(Reinforcing material)

The reinforcing material is made of a woven fabric. The reinforcing material made of a woven fabric is capable of suppressing an increase in the membrane resistance of the diaphragm, as compared with other reinforcing materials

(nonwoven fabrics, fibrils, porous bodies, etc.).

As the reinforcing material, a reinforcing material using, as raw material, a reinforcing fabric made of reinforcing threads and sacrificial threads (hereinafter simply referred to also as "reinforcing fabric (A)") or a reinforcing material made of a reinforcing fabric consisting of reinforcing threads, by itself (hereinafter simply referred to also as "reinforcing fabric (B)"), is preferred, and, from such a viewpoint that the membrane resistance can be suppressed to be low, the reinforcing material using, as raw material, reinforcing fabric (A) is more preferred.

The reinforcing material using reinforcing fabric (A) as raw material, is a material formed from reinforcing threads derived from reinforcing fabric (A) formed by eluting at least part of sacrificial threads in reinforcing fabric (A) by immersing a diaphragm precursor having the reinforcing fabric (A) embedded in an ion-exchange membrane precursor containing polymer (S'), in an alkaline aqueous solution in the step of producing a diaphragm, and sacrificial threads optionally incorporated. The reinforcing material using reinforcing fabric (A) as raw material, is, when part of sacrificial threads has been dissolved, composed of reinforcing threads and remaining undissolved sacrificial threads, or, when all of sacrificial threads have been dissolved, composed solely of reinforcing threads.

Reinforcing fabric (A) is formed by weaving reinforcing threads and sacrificial threads. Reinforcing threads in reinforcing fabric (A) are woven as warp and weft, and sacrificial threads in reinforcing fabric (A) are woven as warp and weft, wherein the warp and weft are orthogonal to each other, in the case of a conventional weaving method such as plain weaving.

As the material for the reinforcing threads in reinforcing fabric (A), a fluorinated polymer such as polytetrafluoroethylene (hereinafter referred to also as "PTFE"), polyphenylsulfone, polyphenylene sulfide (hereinafter referred to also as "PPS"), polypropylene (hereinafter referred to also as "PP"), nylon, etc., may be mentioned, and at least one member selected from the group consisting of PTFE, PPS, nylon and PP, is preferred.

As the material for the sacrificial threads in reinforcing fabric (A), polyethylene terephthalate, polybutylene terephthalate, polytrimethylene terephthalate, etc., may be mentioned.

The form of reinforcing fabric (B) may be a woven fabric, a non-woven fabric, etc., and from the viewpoint of the mechanical strength, a woven fabric is preferred. In a case where reinforcing fabric (B) is a woven fabric, the woven fabric is preferably made by weaving reinforcing threads.

As the material for the reinforcing threads in reinforcing fabric (B), a fluorinated polymer such as PTFE, polyphenylsulfone, PPS, PP, nylon, etc., may be mentioned, and at least one member selected from the group consisting PTFE, PPS, nylon and PP, is preferred.

(Method for producing diaphragm)

The diaphragm of the present invention can be produced, for example, by a production method comprising the following steps (a) to (c).

Step (a): A step of obtaining a diaphragm precursor having a reinforcing fabric embedded in an ion-exchange membrane precursor containing polymer (S').

Step (b): A step of immersing the diaphragm precursor obtained in step (a) in an alkaline aqueous solution to subject groups convertible to sulfonic acid functional groups to hydrolysis treatment to convert them to sulfonic acid functional groups, thereby to obtain a diaphragm.

Step (c): As the case requires, a step of forming a hydrophilic layer on at least one of the surfaces of the ion-exchange membrane precursor, at the same time as step (a) or between step (a) and step (b), or forming a hydrophilic layer on at least one of the surfaces of the ion-exchange membrane, after step (b).

(Step (a))

The diaphragm precursor may be produced by a known method using polymer (S') and a reinforcing fabric. In a case where the ion-exchange membrane precursor is multilayered, a reinforcing material is sandwiched between a film containing polymer (S') and a film containing polymer (S'), so that they are laminated, or polymer (S') is applied by coating on both sides of the reinforcing material, so that the reinforcing material can be embedded in the ion-exchange membrane precursor.

(Step (b))

As the alkaline aqueous solution, one containing an alkali metal hydroxide, a water-soluble organic solvent and water, is preferred.

As the alkali metal hydroxide, sodium hydroxide, potassium hydroxide, etc., may be mentioned. As the alkali metal hydroxide, one type may be used alone, or two or more types may be used in combination.

As the water-soluble organic solvent, dimethyl sulfoxide, N,N-dimethylformamide, N,N-dimethylacetamide, 1-methylpyrrolidone, etc., may be mentioned, and dimethyl sulfoxide is preferred. As the water-soluble organic solvent, one type may be used alone, or two or more types may be used in combination.

The concentration of the alkali metal hydroxide in the alkaline aqueous solution is preferably from 1 to 60 mass%, more preferably from 3 to 55 mass%, further preferably from 5 to 50 mass%. The concentration of the water-soluble organic solvent in the alkaline aqueous solution is preferably from 1 to 60 mass%, more preferably from 3 to 55 mass%, further preferably from 5 to 50 mass%. When the concentration of the alkali metal hydroxide and the concentration of the water-soluble organic solvent are within the above ranges, hydrolysis treatment will be quickly completed, whereby the productivity of the diaphragm will be improved.

The temperature of the alkaline aqueous solution wherein the diaphragm precursor is to be immersed, is preferably at least 30°C and less than 100°C, more preferably at least 35°C and less than 100°C, further preferably at least 40°C and less than 100°C. When the temperature of the alkaline aqueous solution is at least the lower limit value in the above range, the hydrolysis treatment will be quickly completed, whereby the productivity of the diaphragm will be improved. When the temperature of the alkaline aqueous solution is at most the upper limit value in the above range, it is possible to obtain a diaphragm whereby variation in current efficiency at the time of electrolyzing alkaline water is small.

The time for immersing the diaphragm precursor in the alkaline aqueous solution is preferably from 3 to 300 minutes, more preferably from 5 to 120 minutes. When the immersion time is at least the lower limit value in the above range, the conversion rate of groups convertible to sulfonic acid functional groups to sulfonic acid functional groups, will be high. When the immersion time is at most the upper limit value in the above range, it is possible to obtain a diaphragm whereby variation in current efficiency at the time of electrolyzing alkaline water is small.

After the hydrolysis treatment, the diaphragm may be contacted with an aqueous solution containing potassium ions, sodium ions or hydrogen ions to substitute counter ions (cations) of the sulfonic acid functional groups. By substituting cations of the sulfonic acid functional groups by the same cations as the cations present in alkaline water, the diaphragm may be used for alkaline water electrolysis in the environment where the substituted cations are present, whereby the dimensional stability of the diaphragm will be further improved.

(Step (c))

The inorganic particle layer may be formed, for example, by the following method.

- A method of applying a coating liquid comprising inorganic particles, a binder and a dispersion medium, to the surface of an ion-exchange membrane precursor or an ion-exchange membrane, followed by drying.
- A method of applying a pasty coating liquid comprising inorganic particles, a binder and a dispersion medium to a transfer substrate, followed by drying to form an inorganic particle layer, which is then transferred to the surface of an ion-exchange membrane precursor or an ion-exchange membrane.

The method for preparing the coating liquid is preferably a method of mixing inorganic particles, a binder and a dispersion medium, followed by stirring to be uniform by using a ball mill, etc. and then by conducting dispersion treatment by a bead mill. By using such a method, it will be easy to control the average secondary particle diameter of inorganic particles to be within the aforementioned range

As the dispersion medium, when the binder is methylcellulose, water may be mentioned, or when it is a fluorinated polymer having sulfonic acid groups, an alcoholic solvent (ethanol, isopropyl alcohol, etc.) may be mentioned.

As the method for applying the coating liquid, for example, a spraying method, a roll coating method, etc., may be mentioned.

As the drying method, a method of using a heating roll, a method of using an oven, etc., may be mentioned, and industrially, a method of continuously heat-treating by a roll press machine equipped with a heating roll, is preferred.

The drying temperature is preferably at least 30°C, more preferably at least the boiling point of the dispersion medium. The drying temperature is preferably below the melting point of polymer (S') or polymer (S).

As the method for transferring an inorganic particle layer of the transfer substrate to the surface of the ion-exchange membrane precursor or the ion-exchange membrane, for example, a method of heat press bonding the inorganic particle layer and the ion-exchange membrane precursor or the ion-exchange membrane by means of a lamination roll having a pair of metal rolls and a rubber-lined roll, etc. may be mentioned.

The heat press bonding may, for example, be carried out at from 100 to 220°C at a rate of from 1 to 150 cm/min. under a linear pressure of from 1 to 100 kg/cm.

(Advantageous effects)

According to the diaphragm of the present invention as described above, since it contains polymer (S) and does not contain polymer (C), it is possible to suppress an increase in voltage at the time of electrolysis. Further, since

it does not simultaneously have a layer containing polymer (S) and a layer containing polymer (C), interlayer peeling is unlikely to take place.

Further, according to the diaphragm of the present invention as described above, since it has a hydrophilic layer, adhesion of gas generated at the time of electrolysis of alkaline water, will be suppressed, and, as a result, it is possible to further suppress increase in the electrolysis voltage at the time of electrolyzing alkaline water. In order to improve the electric power consumption rate, introduction of a zero-gap electrolyzer having a diaphragm sandwiched directly by an anode and a cathode has been in progress. By the diaphragm of the present invention, it is possible, together with suppression in increase of the electrolysis voltage by the hydrophilic layer, to suppress gas permeation in the diaphragm and to form high quality gas.

Further, since the thickness of the ion-exchange membrane is within a specific range, the mechanical strength becomes to be sufficiently high, the membrane resistance can be suppressed to be low, and the electrolysis voltage at the time of electrolyzing alkaline water can be suppressed to be low.

Further, since the reinforcing material is embedded in the ion-exchange membrane, the mechanical strength of the membrane becomes sufficiently high, and it will be possible to be durable for electrolysis for a long period of time, and at the same time, the ion-exchange membrane can be made to be sufficiently thin. As a result, the membrane resistance can be suppressed to be low, and the electrolysis voltage at the time of electrolyzing alkaline water can be suppressed to be low.

Further, since the ion-exchange capacity of polymer (S) is within a specific range, the membrane resistance will be further lowered, whereby it is possible to suppress the electrolysis voltage at the time of electrolyzing alkane water to be further lower even at a high current density.

Further, when the water content of the polymer having sulfonic acid functional groups or carboxylic acid functional groups is within a specific range, the membrane resistance will be lower as compared with a conventional diaphragm. Therefore, at the time of electrolyzing alkaline water, it will be possible to suppress the electrolysis voltage to be lower even at a high current density.

<Device for electrolyzing alkaline water>

The device for electrolyzing alkaline water of the present invention comprises an electrolytic cell having a cathode and an anode, and the diaphragm of the present invention, mounted in the electrolytic cell so as to partition inside of the electrolytic cell into a cathode chamber on the cathode side and an anode chamber on the anode side.

Fig. 2 is a schematic view showing an example of the device for electrolyzing alkaline water of the present invention.

The device 100 for electrolyzing alkaline water comprises an electrolytic cell 110 having a cathode 112 and an anode 114, and a diaphragm 1 mounted in the electrolytic cell 110 so as to partition inside of the electrolytic cell 110 into a cathode chamber 116 on the cathode 112 side and an anode chamber 118 on the anode 114 side.

The cathode 112 may be disposed as being in contact with the diaphragm 1 or may be disposed as being spaced from the diaphragm 1.

As the material to constitute the cathode chamber 116, preferred is a material which has durability against alkaline water and hydrogen. As such a material, stainless steel, nickel, etc. may be mentioned.

The anode 114 may be disposed as being in contact with the diaphragm 1 or may be disposed as being spaced from the diaphragm 1.

As the material to constitute the anode chamber 118, preferred is a material which has durability against alkaline water and oxygen. As such a material, nickel, titanium, etc. may be mentioned.

(Electrolysis of alkaline water)

In the case of producing hydrogen and oxygen by electrolyzing an alkaline aqueous solution, the electrolysis is conducted by supplying an aqueous solution (hereinafter referred to also as an alkaline aqueous solution) containing a hydroxide of an alkali metal or alkaline earth metal at a predetermined concentration to the anode chamber 118 of the device 100 for electrolyzing alkaline water, and supplying an alkaline aqueous solution having a predetermined concentration to the cathode chamber 116, while discharging the alkaline aqueous solution having a predetermined concentration from the cathode chamber 116 and anode chamber 118.

As the alkaline aqueous solution, an aqueous potassium hydroxide solution or an aqueous sodium hydroxide solution is preferred from the viewpoint of the conductivity and efficient availability.

The concentration of the alkaline aqueous solution to be supplied to the anode chamber 118 is preferably from 10 to 48 mass%.

The concentration of the alkaline aqueous solution to be discharged from the cathode chamber 116 and anode chamber 118 is preferably from 5 to 40 mass%.

The temperature inside of the electrolytic cell 110 is preferably from 50 to 100°C. The current density is preferably from 4 to 12 kA/$m^2$.

(Other embodiments of the device for electrolyzing alkaline water)

The device for electrolyzing alkaline water of the present invention may be one having, as a diaphragm, the diaphragm of the present invention, and the construction other than the diaphragm may be known one.

The electrolytic cell may be a single-polar type wherein a cathode chamber and an anode chamber are alternately arranged with a diaphragm sandwiched therebetween and the cathode chambers to one another and the anode chambers to one another are electrically in parallel, or may be a multi-polar type wherein the back side of a cathode chamber and the back side of an anode chamber are electrically connected, and the respective chambers are electrically in series.

(Advantageous effects)

According to the device for electrolyzing alkaline water of the present invention as described above, since it is one provided with the diaphragm of the present invention, it is possible, at the time of electrolyzing alkaline water, to suppress the electrolysis voltage to be low even at a high current density. Further, in the diaphragm, interlayer peeling is unlikely to occur.

EXAMPLES

Hereinafter, the present invention will be described in detail with reference to Examples, but the present invention is not limited thereto.

Ex. 2 is an Example of the present invention, Ex. 5 to 7 are Comparative Examples, and Ex. 1, 3 and 4 are Reference Examples.

(Ion-exchange capacity)

About 0.5 mg of polymer (S) was formed into a film shape by platen pressing at about 270°C, which was then analyzed by a transmission-type infrared spectrometer, whereupon the ion-exchange capacity was calculated by using the respective peak heights of the $CF_2$ peak, the $CF_3$ peak and the OH peak in the obtained spectrum.

(Water content)

Polymer (S') was molded by means of a pressing machine to obtain a film having a thickness of 100 μm. A sample of 4 cm × 4 cm was cut out from the film, and the mass $W_1$ of the sample was measured. From the mass $W_1$ and the equivalent amount of groups convertible to sulfonic acid functional groups in 1g dry resin of polymer (S'), the dry mass $W_{1'}$ of Na-type polymer (S) was calculated. The sample was immersed in an alkaline aqueous solution comprising an alkali metal hydroxide, a water-soluble organic solvent and water, and hydrolyzed over a period of 16 hours. After washing with a 12 mass% sodium hydroxide aqueous solution, it was immersed in a 12 mass% aqueous sodium hydroxide solution at room temperature for 16 hours, and after wiping off liquid droplets, the mass $W_2$ was measured. The sample was washed with water to remove sodium hydroxide, and dried in a vacuum drier at 90°C. The mass $W_{Dry}$ at this time was measured, and it was confirmed that $W_{1'}$ and $W_{Dry}$ were equivalent. The water content was determined from the following formula.

$$\Delta W = (W_2 - W_{1'})/W_{1'} \times 100$$

(TQ value)

The TQ value was obtained as a temperature showing a volume flow rate of 100 $mm^3$/sec. The volume flow rate was obtained as an amount (unit: $mm^3$/sec) of polymer (S) flowing out when polymer (S) was melted and flown out from an orifice (diameter: 1 mm, length: 1 mm) at a constant temperature under a pressure of 3 MPa by using Shimadzu flow tester CFD-100D (manufactured by Shimadzu Corporation).

(Thickness of ion-exchange membrane)

The thickness of an ion-exchange membrane was obtained as follows.

After drying a diaphragm at 90°C for 2 hours, the cross-section of the diaphragm was observed by means of an optical microscope in an environment of 23°C and 50%RH, and by using an imaging software (manufactured by Innotech Corporation, Pixs2000 PRO), respective 10 places were measured and the average value was obtained. In a case where a reinforcing material was contained, the thicknesses of the respective layers were obtained at positions where the reinforcing threads and sacrificial threads constituting the reinforcing material were not present.

(Device for electrolyzing alkaline water)

As an electrolytic cell (electrolytic surface size: vertical 50 mm × horizontal 50 mm), one wherein for a cathode chamber, the liquid inlet was disposed at a lower portion of the cathode chamber, and the liquid outlet was disposed at an upper portion of the cathode chamber, and for an anode chamber, the liquid inlet was disposed at a lower portion of the anode chamber, and the liquid outlet was disposed at an upper portion of the anode chamber, was used.

As the cathode and anode, ones having ruthenium-containing Raney nickel electrodeposited on punched metal of SUS304 (short diameter: 5 mm, long diameter: 10 mm), were used.

(Electrolysis voltage)

A diaphragm was mounted in the electrolytic cell so as to partition inside of the electrolytic cell into a cathode chamber on the cathode side and an anode chamber on the anode side.

While making the cathode side to be a pressurized state so as to let the anode and the diaphragm be in contact with each other, and supplying an aqueous potassium hydroxide solution having a predetermined concentration and water, to the anode chamber and cathode chamber, and while maintaining the concentration of the aqueous potassium hydroxide solution discharged from the anode chamber and the cathode chamber to be from 28 to 32 mass% or from 13 to 17 mass%, electrolysis of alkaline water was conducted under conditions of a temperature of 80°C and a current density of 6 $kA/m^2$, and the value of the cell voltage at the time of confirming that the voltage was stabilized for at least 12 hours, was adopted as the electrolysis voltage.

(Purity of formed hydrogen gas)

By conducting electrolysis of alkaline water under the same conditions as the conditions at the time of measuring the electrolysis voltage, gas generated from the anode chamber of the electrolytic cell, was sampled in a gas sampler. The sample gas and a standard gas having a known hydrogen concentration, were introduced into a gas chromatograph (manufactured by Shimadzu Corporation, GC-8A) having a thermal conductivity detector, and the hydrogen purity in the sample gas was determined.

(Production of fluorinated polymer (FS'-1))

$CF_2$=$CF_2$ and monomer (2-1) were copolymerized to obtain fluorinated polymer (FS'-1) (ion-exchange capacity after hydrolysis: 1.1 meq/g dry resin, water content after hydrolysis: 20 mass%, TQ value after hydrolysis: 215°C).

$$CF_2{=}CF\text{-}O\text{-}CF_2CF(CF_3)\text{-}O\text{-}CF_2CF_2\text{-}SO_2F \qquad (2\text{-}1)$$

(Production of fluorinated polymer (FS'-2))

$CF_2$=$CF_2$ and monomer (2-1) were copolymerized to obtain fluorinated polymer (FS'-2) (ion-exchange capacity after hydrolysis: 1.25 meq/g dry resin, water content after hydrolysis: 40 mass%, TQ value after hydrolysis: 215°C).

(Production of fluorinated polymer (FS'-3))

$CF_2$=$CF_2$ and monomer (2-1) were copolymerized to obtain fluorinated polymer (FS'-3) (ion-exchange capacity after hydrolysis: 1.05 meq/g dry resin, water content after hydrolysis: 18 mass%, TQ value after hydrolysis: 215°C).

(Production of fluorinated polymer (FC'-1))

$CF_2$=$CF_2$ and $CF_2$=CF-O-$CF_2CF_2CF_2$-$COOCH_3$ as a fluorinated monomer having a group convertible to a carboxylic acid functional group, were copolymerized to obtain fluorinated polymer (FC'-1) having groups convertible to carboxylic acid functional groups (ion-exchange capacity after hydrolysis: 1.08 meq/g dry resin).

(Production of film 1)

Fluorinated polymer (FS'-1) was molded by a melt extrusion method, to obtain film 1 (thickness: 30 μm) made of fluorinated polymer (FS'-1).

(Production of film 2)

Fluorinated polymer (FS'-1) was molded by a melt extrusion method, to obtain film 2 (thickness: 80 μm) made of fluorinated polymer (FS'-1).

(Production of film 3)

Fluorinated polymer (FS'-2) was molded by a melt extrusion method, to obtain film 3 (thickness: 30 μm) made of fluorinated polymer (FS'-2).

(Production of film 4)

Fluorinated polymer (FS'-2) was molded by a melt extrusion method, to obtain film 4 (thickness: 10 μm) made of fluorinated polymer (FS'-2).

(Production of film 5)

Fluorinated polymer (FS'-3) was molded by a melt extrusion method, to obtain film 5 (thickness: 200 μm) made of fluorinated polymer (FS'-3).

(Production of film 6)

Fluorinated polymer (FS'-3) was molded by a melt extrusion method, to obtain film 6 (thickness: 20 μm) made of fluorinated polymer (FS'-3).

(Production of film 7)

Fluorinated polymer (FC'-1) and fluorinated polymer (FS'-1) were molded by a melt extrusion method, to obtain film 7 with a two-layer structure comprising a layer (12 μm) made of fluorinated polymer (FC'-1) and a layer (68 μm) made of fluorinated polymer (FS'-1).

(Production of inorganic particle layer-attached transfer substrate)

A paste having $ZrO_2$ (average particle diameter: 1 μm) dispersed in a 1 mass% methylcellulose aqueous solution, was applied to the surface of a transfer substrate made of a polyethylene terephthalate (hereinafter referred to also as "PET") film by a gravure roll coating method, followed by drying to obtain a transfer substrate provided with an inorganic particle layer containing 12 $g/m^2$ of $ZrO_2$. Hereinafter, the obtained inorganic particle layer-attached transfer substrate will be referred to as "transfer substrate 1".

(Production of reinforcing fabric 1)

By using a 100 denier thread made of PTFE as warp and weft, and using a thread of 30 denier 6 filaments made of PET as warp and weft, plain weaving was conducted so that the density of PTFE thread would be 27 yarns/inch, and the density of PET thread would be 53 yarns/inch, to obtain reinforcing fabric 1.

(Production of reinforcing fabric 2)

By using a 50 denier thread made of PTFE as warp and weft, plain weaving was conducted so that the density of PTFE thread would be 80 yarns/inch, to obtain reinforcing fabric 2.

(Ex. 1) (Reference Example)

Transfer substrate 1/film 1/reinforcing fabric 1/film 2/transfer substrate 1 were superimposed one on another

in this order, so that the respective inorganic particle layers of the two transfer substrates 1 were in contact with the film 1 and the film 2, respectively. The superimposed members were heat-press bonded for 10 minutes by a flat pressing machine at a temperature of 200°C with a surface pressure of 30 MPa/$m^2$, whereupon the transfer substrates at both sides were peeled off at a temperature of 50°C, to obtain a diaphragm precursor.

In a solution of dimethyl sulfoxide/potassium hydroxide/water = 30/5.5/64.5 (mass ratio), the diaphragm precursor was immersed at 95°C for 30 minutes, to hydrolyze groups convertible to sulfonic acid functional groups in the diaphragm precursor, thereby to convert them to K-type sulfonic acid functional groups, followed by washing with water and drying, to obtain a diaphragm having a thickness of the ion-exchange membrane being 110 μm. By using this diaphragm, electrolysis of alkaline water was conducted, whereby the electrolysis voltage was obtained, and the purity of hydrogen gas formed, was evaluated. The results are shown in Table 1.

(Ex. 2)

A diaphragm having a thickness of the ion-exchange membrane being 60 μm was obtained by conducting the operation in the same manner as in Ex. 1 except that transfer substrate 1/film 3/reinforcing fabric 2/film 3/transfer substrate 1 were superimposed in this order, so that the respective inorganic particle layers of the two transfer substrates 1 were in contact with the films 3, respectively. By using this diaphragm, electrolysis of alkaline water was conducted, whereby the electrolysis voltage was obtained, and the purity of hydrogen gas formed, was evaluated. The results are shown in Table 1.

(Ex. 3) (Reference Example)

A diaphragm having a thickness of the ion-exchange membrane being 20 μm was obtained by conducting the operation in the same manner as in Ex. 2 except that films 3 were changed to films 4. By using this diaphragm, electrolysis of alkaline water was conducted, whereby the electrolysis voltage was obtained, and the purity of hydrogen gas formed, was evaluated. The results are shown in Table 1.

(Ex. 4) (Reference Example)

A diaphragm having a thickness of the ion-exchange membrane being 30 μm was obtained by conducting the operation in the same manner as in Ex. 2 except that transfer substrate 1/film 3/transfer substrate 1 were superimposed in this order. By using this diaphragm, electrolysis of alkaline water was conducted, whereby the electrolysis voltage was obtained, and the purity of hydrogen gas formed, was evaluated. The results are shown in Table 1.

(Ex. 5) (Comparative Example)

A diaphragm having a thickness of the ion-exchange membrane being 110 μm and comprising a layer containing sulfonic acid functional groups and a layer containing carboxylic acid functional groups, was obtained by conducting the operation in the same manner as in Ex. 1 except that film 2 was changed to film 7. By using this diaphragm, electrolysis of alkaline water was conducted, whereby the electrolysis voltage was obtained, and the purity of hydrogen gas formed, was evaluated. The results are shown in Table 1. Further, the membrane was dismantled after the electrolysis, whereby interlayer peeling was observed between the layer containing carboxylic acid functional groups and the layer containing sulfonic acid functional groups.

(Ex. 6) (Comparative Example)

By using film 5 as a diaphragm precursor, the diaphragm precursor was immersed in a solution of dimethyl sulfoxide/potassium hydroxide/water = 30/5.5/64.5 (mass ratio) at 95°C for 30 minutes, to hydrolyze groups convertible to sulfonic acid functional groups in the diaphragm precursor thereby to convert them to K-type sulfonic acid functional groups, followed by washing with water and drying, to obtain a diaphragm having a thickness of the ion-exchange membrane being 200 μm. By using this diaphragm, electrolysis of alkaline water was conducted, whereby the electrolysis voltage was obtained, and the purity of hydrogen gas formed, was evaluated. The results are shown in Table 1.

(Ex. 7) (Comparative Example)

It was attempted to obtain a diaphragm having a thickness of the ion-exchange membrane being 20 μm by conducting the operation in the same manner as in Ex. 4 except that film 3 was changed to film 6, but when the diaphragm precursor was immersed in a solution of dimethyl sulfoxide/potassium hydroxide/water = 30/5.5/64.5 (mass ratio), at

95°C for 30 minutes, the strength was insufficient, and the ion-exchange membrane was stretched and broken by plastic deformation during the operation, whereby it was impossible to obtain a diaphragm.

Table 1

| Ex. | Polymer (S) | | Polymer (C) | | Hydrophilic layer | Reinforcing material | Ion-exchange membrane | Electrolysis of alkaline water | |
|---|---|---|---|---|---|---|---|---|---|
| | | | | | | | | Current density: 6 kA/$m^2$ | |
| | Ion-exchange capacity [meq/g] | Thickness [μm] | Ion-exchange capacity [meq/g] | Thickness [μm] | | | Thickness [μm] | Electrolysis voltage | Hydrogen purity |
| | | | | | | | | [V] | [%] |
| 1 | 1.1 | 110 | - | - | Present | 1 | 110 | 2.73 | ≧99.9 |
| 2 | 1.25 | 60 | - | - | Present | 2 | 60 | 2.02 | ≧99.9 |
| 3 | 1.25 | 20 | - | - | Present | 2 | 20 | 1.94 | ≧99.8 |
| 4 | 1.25 | 30 | - | - | Present | - | 30 | 1.94 | ≧99.9 |
| 5 | 1.1 | 98 | 1.08 | 12 | Present | 1 | 110 | >3.12 | ≧99.9 |
| 6 | 1.05 | 200 | - | - | - | - | 200 | >3.12 | ≧99.9 |
| 7 | 1.05 | 20 | - | - | Present | - | - | - | - |

The diaphragm in each of Ex. 1 to 4 (Ex. 1, 3 and 4 are Reference Examples) was composed mainly of an ion-exchange membrane containing polymer (S) and not containing polymer (C) and had a hydrophilic layer, wherein the thickness of the ion-exchange membrane was at most 250 μm, whereby at the time of electrolyzing alkaline water, it was possible to suppress the electrolysis voltage to be low even at a high current density, and further it was possible to maintain the purity of hydrogen gas to be a high purity.

The diaphragm in Ex. 3 (Reference Example) was composed mainly of an ion-exchange membrane containing polymer (S) and not containing polymer (C), had a hydrophilic layer, and further had a reinforcing material, whereby it was possible to suppress the electrolysis voltage to be further low, while maintaining sufficient mechanical strength even if the thickness of the ion-exchange membrane was at most 25 μm.

The diaphragm in Ex. 5 was an ion-exchange membrane comprising polymer (S) and polymer (C), whereby interlayer peeling occurred, and the electrolysis voltage became high.

The diaphragm in Ex. 6 was an ion-exchange membrane having no hydrophilic layer, whereby gas adhered to the surface portion of the membrane, and the electrolysis voltage became high due to an increase in the gas deposition ohmic loss.

The diaphragm in Ex. 7 had no reinforcing material and a thickness of the ion-exchange membrane being 20 μm, in spite of the ion-exchange capacity being low at a level of 1.05 meq/g dry resin, whereby the mechanical strength was insufficient, and it was not possible to obtain a diaphragm.

INDUSTRIAL APPLICABILITY

The diaphragm of the present invention is useful as an ion-permeable diaphragm to be used for alkaline water electrolysis to electrolyze an alkaline aqueous solution, to produce hydrogen and oxygen.

REFERENCE SYMBOLS

1: diaphragm, 10: ion-exchange membrane, 10a: first layer, 10b: second layer, 12: first hydrophilic layer, 14: second hydrophilic layer, 16: reinforcing material, 100: device for electrolyzing alkaline water, 110: electrolytic cell, 112: cathode, 114: anode, 116: cathode chamber, 118: anode chamber.

## Claims

**1.** A diaphragm for electrolyzing alkaline water, comprising an ion-exchange membrane which contains a polymer having sulfonic acid functional groups and which does not contain a polymer having carboxylic acid functional groups, a reinforcing material made of a woven fabric embedded in the ion-exchange membrane, and a hydrophilic layer which is provided as the outermost surface layer on at least one side of the diaphragm, wherein the hydrophilic layer is an inorganic particle layer containing inorganic particles, wherein the thickness of the ion-exchange membrane is from 25 to 70 μm, the thickness being determined by drying the diaphragm at 90°C for 2 hours, observing the cross-section of the diaphragm by means of an optical microscope in an environment of 23°C and 50%RH, and measuring respective 10 places and obtaining the average value by using an imaging software, wherein the thickness is obtained at positions where reinforcing threads and sacrificial threads constituting the reinforcing material are not present, and
wherein the ion-exchange capacity of the polymer having sulfonic acid functional groups is from 1.2 to 1.8 meq/g dry resin, wherein the ion-exchange capacity is determined by forming 0.5 mg of polymer (S) into a film shape by platen pressing at about 270°C, followed by analyzing by a transmission-type infrared spectrometer, whereupon the ion-exchange capacity was calculated by using the respective peak heights of the $CF_2$ peak, the $CF_3$ peak and the OH peak in the obtained spectrum.

**2.** The diaphragm for electrolyzing alkaline water according to Claim 1, wherein the reinforcing material is made of a woven fabric comprising at least one type of reinforcing thread selected from the group consisting of a reinforcing thread made of polytetrafluoroethylene, a reinforcing thread made of polyphenylene sulfide, a reinforcing thread made of nylon, and a reinforcing thread made of polypropylene.

**3.** The diaphragm for electrolyzing alkaline water according to Claim 1 or 2, wherein the diaphragm has a hydrophilic layer as the outermost layer on each side thereof.

**4.** The diaphragm for electrolyzing alkaline water according to any one of Claims 1 to 3, wherein the inorganic particles are inorganic particles made of at least one member selected from the group consisting of oxides, nitrides and

carbides of Group 4 elements or Group 14 elements.

**5.** The diaphragm for electrolyzing alkaline water according to any one of Claims 1 to 4, wherein the inorganic particles are inorganic particles made of $SiO_2$, SiC, $ZrO_2$ or ZrC.

**6.** The diaphragm for electrolyzing alkaline water according to any one of Claims 1 to 5, wherein the polymer having sulfonic acid functional groups is a fluorinated polymer having sulfonic acid functional groups.

**7.** The diaphragm for electrolyzing alkaline water according to Claim 6, wherein the ion-exchange membrane contains, as the polymer having sulfonic acid functional groups, a polymer having units represented by the following formula (u1):

$$-[CF2\ -CF(-O-CF_2\ CF(CF_3\ )-O-(CF_2\ )m\ -SO_3\ M)]- \qquad (u1)$$

wherein m is an integer of from 1 to 6, and M is an alkali metal.

**8.** The diaphragm for electrolyzing alkaline water according to Claim 6, wherein the ion-exchange membrane contains, as the polymer having sulfonic acid functional groups, a polymer having units represented by the following formula (u2):

$$-[CF_2\ -CF(-O-(CF_2\ )_m\ -SO_3\ M)]- \qquad (u2)$$

wherein m is an integer of from 1 to 6, and M is an alkali metal.

**9.** The diaphragm for electrolyzing alkaline water according to Claim 6, wherein the ion-exchange membrane contains, as the polymer having sulfonic acid functional groups, a polymer having units represented by the following formula (u3):

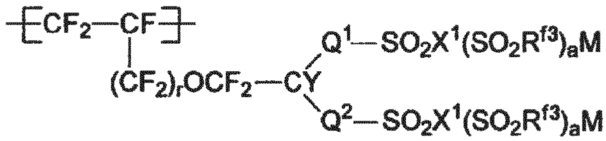

(u3)

wherein $Q^1$ is a perfluoroalkylene group which may have an etheric oxygen atom, $Q^2$ is a single bond or a perfluoroalkylene group which may have an etheric oxygen atom, $R^{f3}$ is a perfluoroalkyl group which may have an etheric oxygen atom, $X^1$ is an oxygen atom, a nitrogen atom or a carbon atom, when $X^1$ is an oxygen atom, a is 0, when $X^1$ is a nitrogen atom, a is 1, and when $X^1$ is a carbon atom, a is 2, Y is a fluorine atom or a monovalent perfluoro organic group, r is 0 or 1, and M is an alkali metal.

**10.** The diaphragm for electrolyzing alkaline water according to Claim 9, wherein the units represented by the above formula (u3) are units represented by the following formula (u31):

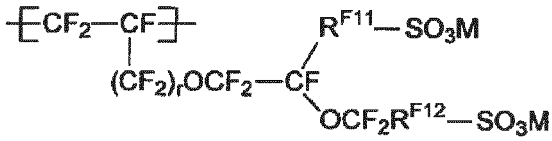

(u31)

wherein $R^{F11}$ is a single bond or a $C_{1-6}$ linear perfluoroalkylene group which may have an etheric oxygen atom, and $R^{F12}$ is a $C_{1-6}$ linear perfluoroalkylene group, r is 0 or 1, and M is an alkali metal.

**11.** A device for electrolyzing alkaline water, comprising

an electrolytic cell having a cathode and an anode, and
a diaphragm for electrolyzing alkaline water as defined in any one of Claims 1 to 10, which is mounted in the electrolytic cell so as to partition inside of the electrolytic cell into a cathode chamber on the cathode side and an anode chamber on the anode side.

**Patentansprüche**

1. Membran zur Elektrolyse von alkalischem Wasser, umfassend eine Ionenaustauschmembran, die ein Polymer mit funktionellen Sulfonsäuregruppen enthält und die kein Polymer mit funktionellen Carbonsäuregruppen enthält, ein Verstärkungsmaterial, das aus einem Gewebe hergestellt ist, das in die Ionenaustauschmembran eingebettet ist, und eine hydrophile Schicht, die als die äußerste Oberflächenschicht auf mindestens einer Seite der Membran bereitgestellt ist, wobei die hydrophile Schicht eine anorganische Teilchenschicht ist, die anorganische Teilchen enthält, wobei die Dicke der Ionenaustauschmembran von 25 bis 70 μm beträgt, wobei die Dicke durch Trocknen der Membran bei 90°C für 2 Stunden, Betrachten des Querschnitts der Membran mittels eines optischen Mikroskops in einer Umgebung von 23°C und 50% RH und Messen von jeweils 10 Stellen und Erhalten des Durchschnittswerts unter Verwendung einer Bildgebungssoftware bestimmt wird, wobei die Dicke an Stellen erhalten wird, wo Verstärkungsfäden und Opferfäden, die das Verstärkungsmaterial bilden, nicht vorhanden sind, und
wobei die Ionenaustauschkapazität des Polymers mit funktionellen Sulfonsäuregruppen von 1,2 bis 1,8 meq/g trockenes Harz beträgt, wobei die Ionenaustauschkapazität durch Formen von 0,5 mg Polymer (S) in eine Filmform durch Plattenpressen bei etwa 270°C, gefolgt von Analysieren durch ein Infrarotspektrometer vom Transmissionstyp, bestimmt wird, woraufhin die Ionenaustauschkapazität unter Verwendung der jeweiligen Peakhöhen des $CF_2$-Peaks, des $CF_3$-Peaks und des OH-Peaks in dem erhaltenen Spektrum berechnet wird.

2. Membran zur Elektrolyse von alkalischem Wasser nach Anspruch 1, wobei das Verstärkungsmaterial aus einem Gewebe hergestellt ist, das mindestens eine Art von Verstärkungsfaden, ausgewählt aus der Gruppe, bestehend aus einem Verstärkungsfaden hergestellt aus Polytetrafluorethylen, einem Verstärkungsfaden hergestellt aus Polyphenylensulfid, einem Verstärkungsfaden hergestellt aus Nylon, und einem Verstärkungsfaden hergestellt aus Polypropylen, umfasst.

3. Membran zur Elektrolyse von alkalischem Wasser nach Anspruch 1 oder 2, wobei die Membran eine hydrophile Schicht als die äußerste Schicht auf jeder Seite davon aufweist.

4. Membran für die Elektrolyse von alkalischem Wasser nach einem der Ansprüche 1 bis 3, wobei die anorganischen Teilchen anorganische Teilchen sind, die aus mindestens einem Element, ausgewählt aus der Gruppe, bestehend aus Oxiden, Nitriden und Carbiden der Elemente der Gruppe 4 oder der Elemente der Gruppe 14, hergestellt sind.

5. Membran zur Elektrolyse von alkalischem Wasser nach einem der Ansprüche 1 bis 4, wobei die anorganischen Teilchen aus $SiO_2$, SiC, $ZrO_2$ oder ZrC hergestellte anorganische Teilchen sind.

6. Membran zur Elektrolyse von alkalischem Wasser nach einem der Ansprüche 1 bis 5, wobei das Polymer mit funktionellen Sulfonsäuregruppen ein fluoriertes Polymer mit funktionellen Sulfonsäuregruppen ist.

7. Membran zur Elektrolyse von alkalischem Wasser nach Anspruch 6, wobei die Ionenaustauschmembran als das Polymer mit funktionellen Sulfonsäuregruppen ein Polymer mit Einheiten, dargestellt durch die nachstehende Formel (u1), enthält:

$$-[CF2\ -CF(-O-CF2\ CF(CF_3\ )-O-(CF_2\ )_m\ -SO_3\ M)]- \qquad (u1)$$

wobei m eine ganze Zahl von 1 bis 6 ist und M ein Alkalimetall ist.

8. Membran zur Elektrolyse von alkalischem Wasser nach Anspruch 6, wobei die Ionenaustauschmembran als das Polymer mit funktionellen Sulfonsäuregruppen ein Polymer mit Einheiten, dargestellt durch die nachstehende Formel (u2), enthält:

$$-[CF2\ -CF(-O-(CF_2)_m\ -SO_3\ M)]- \qquad (u2)$$

wobei m eine ganze Zahl von 1 bis 6 ist und M ein Alkalimetall ist.

9. Membran zur Elektrolyse von alkalischem Wasser nach Anspruch 6, wobei die Ionenaustauschmembran als das Polymer mit funktionellen Sulfonsäuregruppen ein Polymer mit Einheiten, dargestellt durch die nachstehende Formel (u3), enthält:

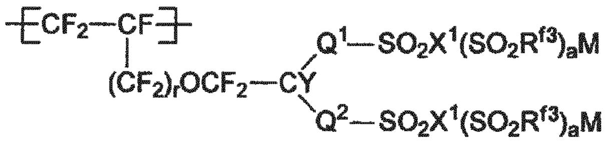

(u3)

wobei $Q^1$ eine Perfluoralkylengruppe ist, die ein etherisches Sauerstoffatom aufweisen kann, $Q^2$ eine Einfachbindung oder eine Perfluoralkylengruppe ist, die ein etherisches Sauerstoffatom aufweisen kann, $R^{f3}$ eine Perfluoralkylgruppe ist, die ein etherisches Sauerstoffatom aufweisen kann, $X^1$ ein Sauerstoffatom, ein Stickstoffatom oder ein Kohlenstoffatom ist, wenn $X^1$ ein Sauerstoffatom ist, a 0 ist, wenn $X^1$ ein Stickstoffatom ist, a 1 ist und wenn $X^1$ ein Kohlenstoffatom ist, a 2 ist, Y ein Fluoratom oder eine einwertige organische Perfluorgruppe ist, r 0 oder 1 ist und M ein Alkalimetall ist.

**10.** Membran zur Elektrolyse von alkalischem Wasser nach Anspruch 9, wobei die Einheiten, dargestellt durch die vorstehende Formel (u3), Einheiten sind, die durch die nachstehende Formel (u31) dargestellt werden:

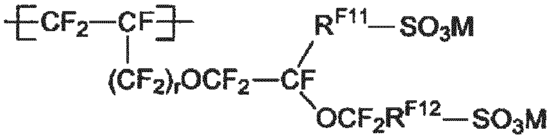

(u31)

worin $R^{F11}$ eine Einfachbindung oder eine lineare $C_{1-6}$-Perfluoralkylengruppe ist, die ein etherisches Sauerstoffatom aufweisen kann, und $R^{F12}$ eine lineare $C_{1-6}$-Perfluoralkylengruppe ist, r 0 oder 1 ist, und M ein Alkalimetall ist.

**11.** Vorrichtung zur Elektrolyse von alkalischem Wasser, umfassend

eine Elektrolysezelle mit einer Kathode und einer Anode, und
eine Membran zur Elektrolyse von alkalischem Wasser nach einem der Ansprüche 1 bis 10, die in der Elektrolysezelle so gelagert ist, dass sie das Innere der Elektrolysezelle in eine Kathodenkammer auf der Kathodenseite und eine Anodenkammer auf der Anodenseite unterteilt.

## Revendications

**1.** Diaphragme pour l'électrolyse d'une eau alcaline, comprenant une membrane échangeuse d'ions qui contient un polymère ayant des groupes fonctionnels acide sulfonique et qui ne contient pas de polymère ayant des groupes fonctionnels acide carboxylique, un matériau de renforcement fait d'un tissu tissé incrusté dans la membrane échangeuse d'ions, et une couche hydrophile qui est fournie sous la forme de la couche de surface la plus externe sur au moins un côté du diaphragme, dans lequel la couche hydrophile est une couche de particules inorganiques contenant des particules inorganiques, dans lequel l'épaisseur de la membrane échangeuse d'ions est de 25 à 70 μm, l'épaisseur étant déterminée en séchant le diaphragme à 90 °C pendant 2 heures, en observant la section transversale du diaphragme au moyen d'un microscope optique dans un environnement de 23 °C et d'une HR de 50 %, et en mesurant 10 endroits respectifs et en obtenant la valeur moyenne en utilisant un logiciel d'imagerie, dans lequel l'épaisseur est obtenue à des positions où des fils de renforcement et des fils sacrificiels constituant le matériau de renforcement ne sont pas présents, et
dans lequel la capacité d'échange d'ions du polymère ayant des groupes fonctionnels acide sulfonique est de 1,2 à 1,8 meq/g de résine sèche, dans lequel la capacité d'échange d'ions est déterminée en formant 0,5 mg de polymère (S) sous la forme d'un film par pressage sous platine à environ 270 °C, suivi d'une analyse par un spectromètre infrarouge à transmission, après quoi la capacité d'échange d'ions a été calculée en utilisant les hauteurs respectives de pics du pic de $CF_2$, du pic de $CF_3$ et du pic de OH sur le spectre obtenu.

**2.** Diaphragme pour l'électrolyse d'une eau alcaline selon la revendication 1, dans lequel le matériau de renforcement est fait d'un tissu tissé comprenant au moins un type de fil de renforcement sélectionné dans le groupe consistant en un fil de renforcement en polytétrafluoroéthylène, un fil de renforcement en polysulfure de phénylène, un fil de renforcement en nylon, et un fil de renforcement en polypropylène.

**3.** Diaphragme pour l'électrolyse d'une eau alcaline selon la revendication 1 ou 2, dans lequel le diaphragme présente

une couche hydrophile en tant que couche la plus externe sur chaque côté de celui-ci.

**4.** Diaphragme pour l'électrolyse d'une eau alcaline selon l'une quelconque des revendications 1 à 3, dans lequel les particules inorganiques sont des particules inorganiques faites d'au moins un élément sélectionné dans le groupe consistant en les oxydes, les nitrures et les carbures des éléments du groupe 4 ou des éléments du groupe 14.

**5.** Diaphragme pour l'électrolyse d'une eau alcaline selon l'une quelconque des revendications 1 à 4, dans lequel les particules inorganiques sont des particules inorganiques faites de $SiO_2$, SiC, $ZrO_2$ ou ZrC.

**6.** Diaphragme pour l'électrolyse d'une eau alcaline selon l'une quelconque des revendications 1 à 5, dans lequel le polymère ayant des groupes fonctionnels acide sulfonique est un polymère fluoré ayant des groupes fonctionnels acide sulfonique.

**7.** Diaphragme pour l'électrolyse d'une eau alcaline selon la revendication 6, dans lequel la membrane échangeuse d'ions contient, en tant que polymère ayant des groupes fonctionnels acide sulfonique, un polymère ayant des motifs représentés par la formule (u1) suivante :

$$-[CF_2-CF(-O-CF_2CF(CF_3)-O-(CF_2)_m-SO_3M)]- \qquad (u1)$$

dans laquelle m est un nombre entier allant de 1 à 6, et M est un métal alcalin.

**8.** Diaphragme pour l'électrolyse d'une eau alcaline selon la revendication 6, dans lequel la membrane échangeuse d'ions contient, en tant que polymère ayant des groupes fonctionnels acide sulfonique, un polymère ayant des motifs représentés par la formule (u2) suivante :

$$-[CF_2-CF(-O-(CF_2)_m-SO_3M)]- \qquad (u2)$$

dans laquelle m est un nombre entier allant de 1 à 6, et M est un métal alcalin.

**9.** Diaphragme pour l'électrolyse d'une eau alcaline selon la revendication 6, dans lequel la membrane échangeuse d'ions contient, en tant que polymère ayant des groupes fonctionnels acide sulfonique, un polymère ayant des motifs représentés par la formule (u3) suivante :

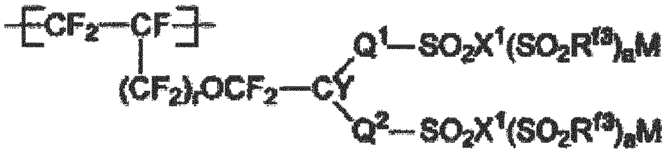

(u3)

dans laquelle $Q^1$ est un groupe perfluoroalkylène qui peut avoir un atome d'oxygène éthérique, $Q^2$ est une liaison simple ou un groupe perfluoroalkylène qui peut avoir un atome d'oxygène éthérique, $R^{f3}$ est un groupe perfluoroalkyle qui peut avoir un atome d'oxygène éthérique, $X^1$ est un atome d'oxygène, un atome d'azote ou un atome de carbone, quand $X^1$ est un atome d'oxygène, a est 0, quand $X^1$ est un atome d'azote, a est 1, et quand $X^1$ est un atome de carbone, a est 2, Y est un atome de fluor ou un groupe organique perfluoré monovalent, r est 0 ou 1, et M est un métal alcalin.

**10.** Diaphragme pour l'électrolyse d'une eau alcaline selon la revendication 9, dans lequel les motifs représentés par la formule (u3) ci-dessus sont des motifs représentés par la formule (u31) suivante :

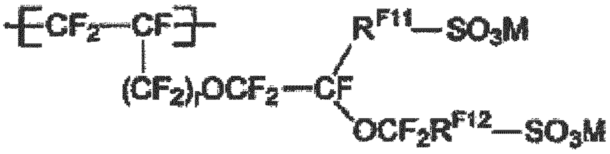

(u31)

dans laquelle $R^{F11}$ est une liaison simple ou un groupe $C_{1-6}$ perfluoroalkylène linéaire qui peut avoir un atome d'oxygène éthérique, et $R^{F12}$ est un groupe $C_{1-6}$ perfluoroalkylène linéaire, r est 0 ou 1, et M est un métal alcalin.

**11.** Dispositif pour l'électrolyse d'une eau alcaline, comprenant

une cellule électrolytique ayant une cathode et une anode, et
un diaphragme pour l'électrolyse d'une eau alcaline tel que défini dans l'une quelconque des revendications 1 à 10, qui est monté dans la cellule électrolytique de manière à séparer l'intérieur de la cellule électrolytique en une chambre cathodique du côté de la cathode et une chambre anodique du côté de l'anode.

Fig. 1

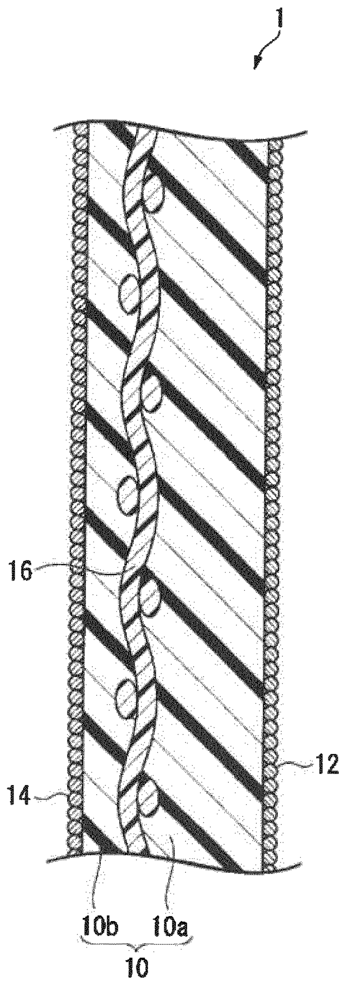
1
16
14
12
10b
10a
10

Fig. 2

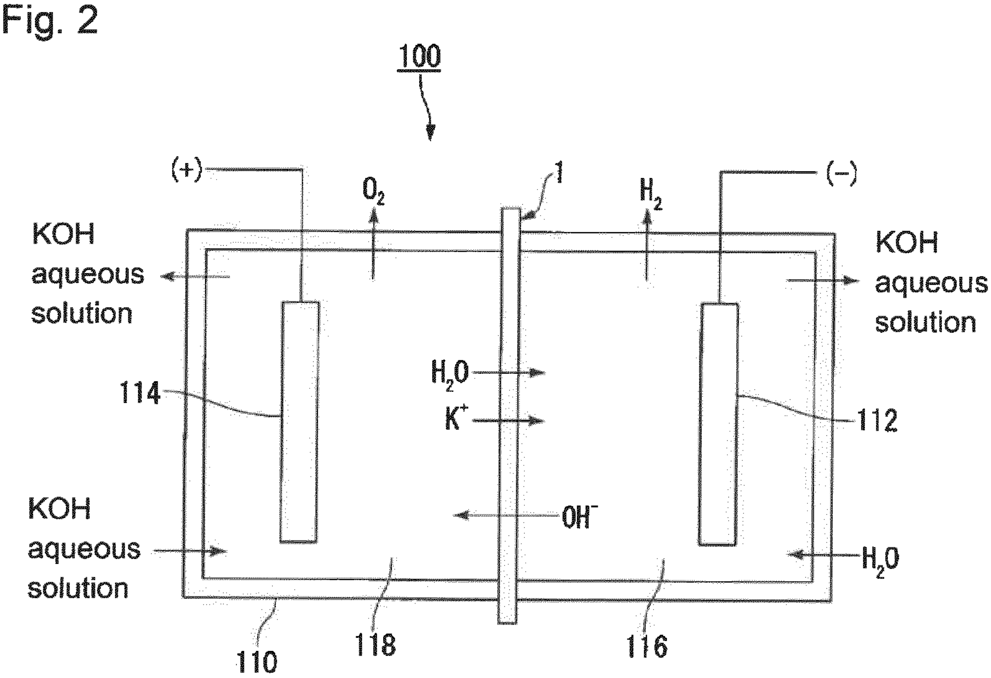
100
(+)
(−)
1
$O_2$
$H_2$
KOH aqueous solution
KOH aqueous solution
$H_2O$
$K^+$
114
112
KOH aqueous solution
$OH^-$
$H_2O$
110
118
116

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008093570 A1
- JP H0978280 A
- JP H03137136 A
- JP H08188895 A
- US 5716504 A
- US 4324606 A
- JP H08158085 A
- JP S57194274 A
- WO 2013191140 A
- JP 2015117407 A